Europäisches Patentamt

European Patent Office

Office européen des brevets

(19)

(11) Numéro de publication : **0 036 809**
**B1**

(12) FASCICULE DE BREVET EUROPÉEN

(45) Date de publication du fascicule du brevet :
28.11.84

(51) Int. Cl.³ : **G 01 L 9/10**

(21) Numéro de dépôt : 81400410.7

(22) Date de dépôt : 17.03.81

(54) Capteur de pression, notamment pour mesurer la pression à l'admission d'un moteur à combustion interne.

(30) Priorité : 21.03.80 FR 8006310

(43) Date de publication de la demande :
30.09.81 Bulletin 81/39

(45) Mention de la délivrance du brevet :
28.11.84 Bulletin 84/48

(84) Etats contractants désignés :
AT BE CH DE GB IT LI NL SE

(56) Documents cités :
CH-A- 394 659
DE-A- 2 617 576
FR-A- 2 377 614
FR-A- 2 394 075
FR-A- 2 406 184
US-A- 3 800 258
US-A- 4 161 886

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Rousseau, Christian**
**6, allée Suzanne**
**F-92160 Antony (FR)**
Inventeur : **Lombard, Claude**
**60, rue Corneille**
**F-78150 Le Chesnay (FR)**

(74) Mandataire : **Colas, Jean-Pierre et al**
**8 et 10 Avenue Emile Zola**
**F-92109 Boulogne-Billancourt (FR)**

## Description

La présente invention est relative à un capteur de pression, notamment pour la mesure de la pression à l'admission d'un moteur à combustion interne.

On connaît depuis longtemps le principe d'un capteur de pression ou de variation de pression dans lequel une pièce en matériau magnétique coopérant avec une bobine suit les déplacements d'une membrane souple fermant une cavité à laquelle est appliquée la pression ou la différence de pression à mesurer. Différentes réalisations ont été proposées à partir de ce principe. En particulier, la demande de brevet DE-A-2 617 576 décrit un capteur de pression, notamment pour mesurer la pression à l'admission d'un moteur à explosion, du type comprenant une première chambre reliée à l'admission du moteur, une deuxième chambre reliée à l'extérieur, une membrane souple à contour bloqué séparant de façon étanche la première chambre de la deuxième chambre, un premier ressort agissant contre la membrane, un tube de guidage du premier ressort servant de butée à la membrane, un noyau cylindrique central mobile selon son axe et solidaire des déplacements de la membrane, un enroulement unique placé sur une bobine isolante entourant le noyau mobile coaxialement à celui-ci et couvrant la plus grande partie dudit noyau mobile dans sa position la plus enfoncée, et un circuit électronique transducteur des déplacements de la membrane et connecté à l'enroulement.

De plus, il est connu par le brevet FR-A-2 377 614 de réaliser un capteur de pression dans lequel le circuit électronique est un oscillateur de manière à constituer un transducteur fréquence/pression.

Dans un certain nombre d'applications d'électronique automobile, il est intéressant de connaître avec une bonne précision la pression à l'admission d'un moteur à combustion interne. On peut citer, à titre d'exemple de telles applications, l'allumage électronique intégral, l'injection électronique ou des indicateurs de conduite économique.

Dans le cas de l'allumage électronique donné à titre d'exemple d'application, une difficulté survient si on veut monter un même calculateur sur toute une gamme de véhicules du fait que la cartographie des lois d'avance à l'allumage en fonction de la pression à l'admission varie d'un type de véhicules au suivant. De plus, sur un même type de véhicules, la même difficulté survient si on veut, sans changer le calculateur, modifier légèrement la loi de correction de l'avance à l'allumage en fonction de la pression à l'admission, soit pour accepter des variations des caractéristiques du moteur au cours de son évolution, soit pour tenir compte des variations temporelles ou locales de la composition des carburants. Or, pour réduire le coût des pièces telles qu'un calculateur électronique, il est bien connu qu'il y a intérêt d'une part, à produire des grandes séries de pièces identiques et, d'autre part, à éviter le stockage, notamment dans le réseau de distribution, d'un grand nombre de calculateurs beaucoup plus coûteux que des capteurs.

Une autre difficulté survient si la loi d'avance à l'allumage pour un moteur donné doit être définie avec une grande précision, ce qui est notamment le cas des moteurs présentant une faible garde au cliquetis pour la loi considérée. Ceci implique, usuellement en ce qui concerne le paramètre pression, l'utilisation de capteurs coûteux.

La présente invention a pour but de supprimer ces difficultés en proposant un capteur du type précité et à relation fonctionnelle fréquence/pression dont la conception permet le réglage facile des paramètres significatifs. Cette conception permet soit d'accepter des dispersions élargies sur les caractéristiques physiques et mécaniques des différents éléments composant ce capteur pour une dispersion donnée de la relation fonctionnelle fréquence/pression, soit de modifier simplement à moindre coût ladite relation fonctionnelle sans changer la définition des différents éléments constitutifs dudit capteur.

Suivant l'invention, ces buts sont atteints au moyen d'un capteur tel que défini dans la revendication 1 grâce au fait que le premier moyen de réglage permet d'ajuster la pression initiale $P_1$ à partir de laquelle le capteur délivre la relation fonctionnelle fréquence/pression et que le deuxième moyen de réglage permet d'ajuster dans une certaine mesure la self inductance initiale de la bobine et donc la fréquence initiale $f_1$ correspondant à la pression initiale $P_1$.

De préférence, le capteur comprend un troisième moyen de réglage tel que la position de la bobine dans la carcasse magnétique peut être également réglée axialement le long du noyau central ce qui, en changeant la position initiale de la bobine par rapport au noyau et la répartition dans la bobine des flux de fuite entre ledit noyau et ladite carcasse, modifie la loi de variation de la self inductance, donc de la fréquence, en fonction de la position du noyau représentative de la pression, et permet donc le réglage de la pente de la relation fonctionnelle fréquence/pression fournie par le capteur suivant l'invention.

Il est, en outre, avantageux que le condensateur d'accord soit intégré au capteur car les dispersions sur la valeur dudit condensateur peuvent être rattrapées par le réglage de la self inductance initiale, sans obliger à faire un réglage sur le module électronique d'allumage terminé.

D'autres caractéristiques ressortiront de la description qui suit et qui n'est donnée qu'à titre d'exemple non limitatif. A cet effet, on se reportera aux figures jointes dans lesquelles :

la figure 1 représente un capteur de pression suivant l'invention, dans une coupe longitudinale,

la figure 2 représente le même ensemble vu de dessous,

la figure 3 représente deux demies coupes A et B, à une échelle plus grande, de la bobine réglable en position dans la carcasse magnétique fermée. La coupe est faite suivant l'axe XX de la figure 2. Seules, les parties essentielles ont été figurées,

la figure 4 représente la courbe caractéristique de la transformation pression P/effort F,

la figure 5 représente la courbe caractéristique de la transformation déplacement D/fréquence f pour deux positions A et B de la bobine,

la figure 6 représente la courbe caractéristique de la relation fonctionnelle fréquence f/pression P fournie par le capteur pour les positions A et B de la bobine,

la figure 7 représente en vue de dessus le montage du condensateur d'accord sur la bobine et les raccordements des connexions,

la figure 8 représente une variante du capteur suivant l'invention dans laquelle le ressort peut éventuellement travailler aussi bien en traction qu'en compression.

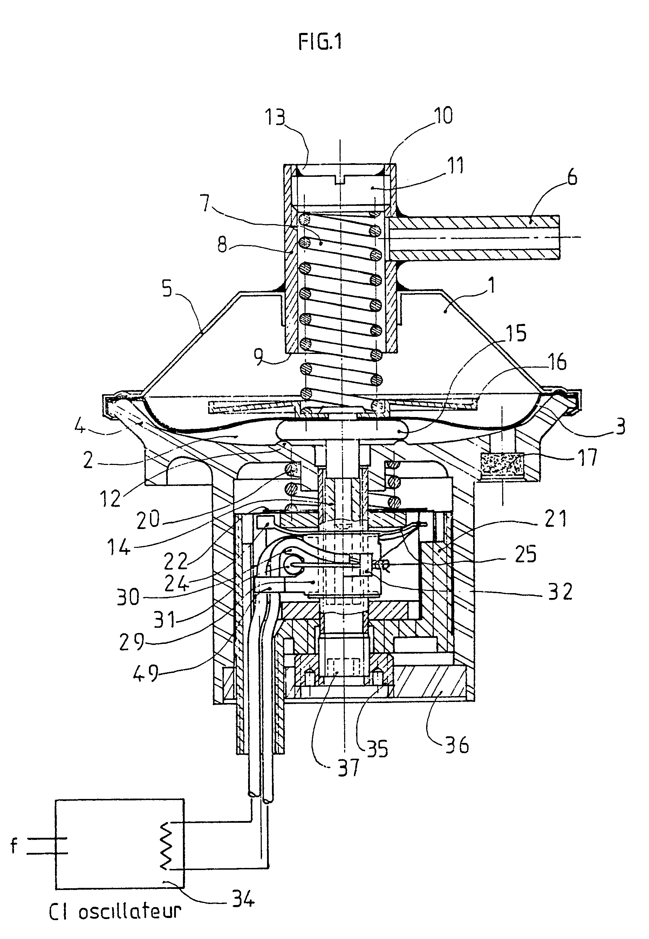

Suivant la représentation de la figure 1, le capteur de pression comporte une chambre avant 1 et une chambre arrière 2 séparées par une membrane 3 montée sertie entre le corps 4 et la calotte 5. La chambre 1 est reliée par l'intermédiaire d'un tube de raccordement 6 avec la tubulure d'admission, non représentée, d'un moteur à combustion interne. Cette chambre 1 contient un ressort 7 guidé extérieurement par un tube 8 dont l'extrémité 9 sert de butée pour la membrane 3 et l'extrémité 10 taraudée reçoit un bouchon fileté 11 permettant le réglage de la position du ressort 7 ce qui autorise le montage de ressorts de longueur libre assez dispersée. Ledit bouchon 11 permet, de plus, de régler l'effort de précontrainte du ressort 7, exercé sur la membrane 3 maintenue en appui sur le corps 4 présentant une forme de butée 12, de sorte que, pour toute pression inférieure à une valeur préalablement choisie, aucun déplacement de ladite membrane ne puisse être observé. L'étanchéité de la chambre 1 est assurée d'une part, par le sertissage de la membrane 3 entre la calotte 5 et le corps 4, d'autre part, par le dépôt d'un produit d'étanchéité 13 connu sur le bouchon fileté 11. Le déplacement de la membrane 3 est transmis à un noyau central 14 en ferrite collé sur un poussoir 15 de membrane, solidarisé de façon étanche au centre de ladite membrane par un sertissage, du genre gyroscopique par exemple, sur une coupelle 16, de sorte que la membrane 3 est pincée lors du sertissage entre ladite coupelle 16 et ledit poussoir 15.

La chambre arrière 2 est reliée à l'atmosphère extérieure par un filtre pneumatique 17 de perte de charge connue de manière que la raideur pneumatique de ladite chambre 2 soit le plus généralement négligeable devant la raideur de l'ensemble ressort 7 et membrane 3 et qu'aucun effet pneumatique et thermique dans cette chambre ne vienne perturber le fonctionnement du capteur.

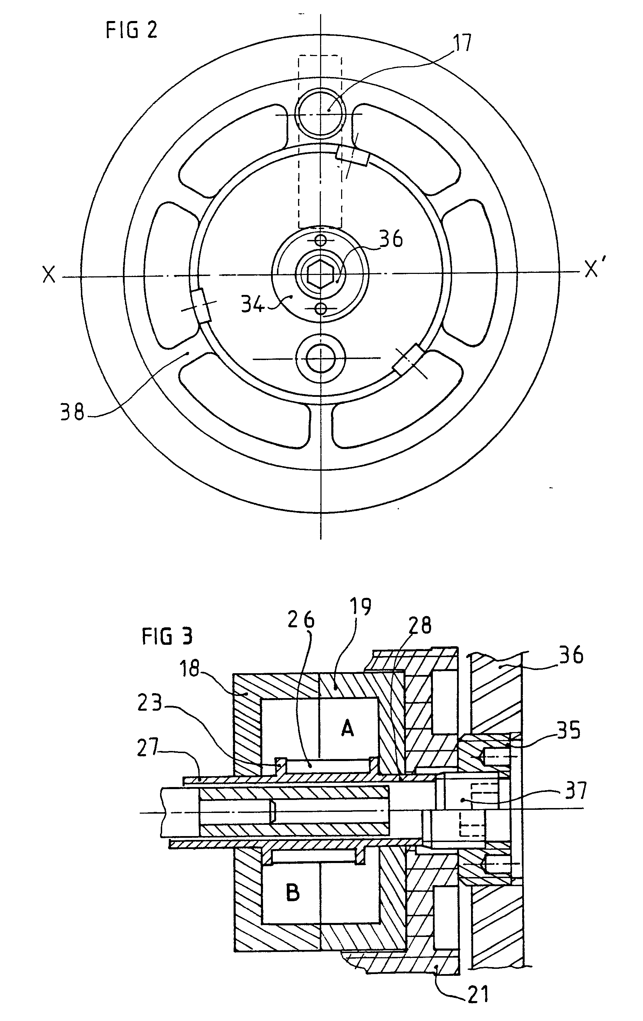

Le noyau central 14 en ferrite se déplace dans une carcasse magnétique fermée en ferrite constituée de deux demis cylindres emboîtés 18, 19 (voir figure 3), identiques ou non, percés d'un trou à chaque extrémité le long de leur axe et maintenus en place par un ressort de poussée 20 dans un support cylindrique 21 centré dans le corps 4. Dans le cas où la carcasse 18, 19 magnétique est conductrice, on intercale entre le ressort de poussée 20 et ladite carcasse une rondelle isolante 22.

Dans la carcasse magnétique 18, 19 se trouve une bobine 23 en plastique souple isolant, munie de deux ailes 24 et 25 assurant, d'une part, l'arrêt du fil de l'enroulement unique 26 et, d'autre part, le maintien en position de ladite bobine dans la carcasse magnétique. Les extrémités 27 et 28 de la bobine 23 la centre dans la carcasse magnétique 18, 19 elle-même centrée dans le corps 4 au moyen du support 21. Il existe donc un coin d'air entre le noyau 14 et ladite carcasse 18, 19 formé par l'épaisseur des extrémités 27 et 28 de la bobine 23. Ces extrémités 27 et 28 guident simultanément le déplacement de la membrane en centrant le noyau 14.

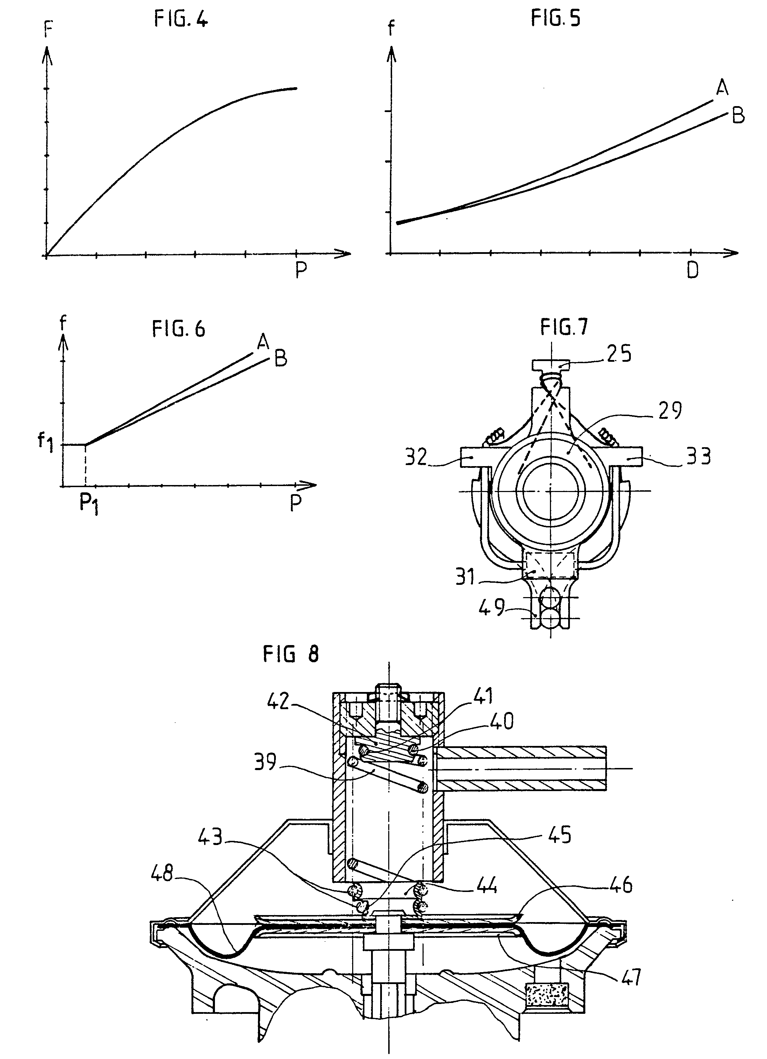

Sur la bobine 23 est enclipsée une pièce intérieurement cylindrique 29 en matière plastique représentée plus en détail sur la figure 7, munie d'une fourche 30 dans laquelle est monté un condensateur 31 d'accord de l'enroulement 26, et de deux ailettes 32 et 33. Les fils de sortie de l'enroulement 26 sont bobinés puis soudés sur les connexions du condensateur 31 préalablement passées au travers de deux petits trous sur lesdites ailettes. Les fils de sortie du capteur sont soudés simultanément sur les connexions du condensateur 31 et sont reliés à un circuit amplificateur à résistance d'entrée négative 34 de manière à constituer un transducteur fréquence/pression variable. Ces fils de sortie sont maintenus par une deuxième fourche 49.

La position du support 21 de la carcasse magnétique 18, 19 contenant la bobine 23 avec son enroulement 26 peut être réglée axialement, par rapport au noyau central 14 maintenu dans une position déterminée, par une vis de réglage 35 vissée sur un flasque de réglage 36 serti sur la partie arrière du corps 4. Le ressort de poussée 20 maintient la carcasse magnétique 18, 19 dans son support 21 contre ladite vis de réglage.

La position de la bobine 23 peut être réglée à l'intérieur de la carcasse 18, 19 le long du noyau central 14 par une deuxième vis de réglage 37 coaxiale à la première 35. Les ailettes 24 et 25 de ladite bobine, en appui contre le cylindre 18 de la carcasse magnétique, maintiennent l'extrémité 28 de ladite bobine contre le moyen de réglage 37. Un moyen de freinage du genre résine acrylique empêche la vis 35 de tourner lorsqu'on règle la position de la bobine 23 par la vis 37.

Le mode de fonctionnement du capteur suivant l'invention est le suivant : la membrane souple 3 transforme en effort la pression appliquée au capteur de façon antagoniste avec le ressort 8. Une relation entre l'effort F appliqué audit ressort par ladite membrane et la pression P régnant dans la chambre 1 est representée sur la figure 4 à titre d'exemple. La forme de cette relation peut être modifiée en changeant la nature et les caractéristiques physiques de la membrane 3, les dimensions de la coupelle 16, la géométrie de la calotte 5, notamment l'angle qu'elle fait avec le plan de sertissage, enfin la raideur du ressort 7 en ce qu'elle modifie le point de fonctionnement de ladite membrane pour une pression donnée.

Cet effort appliqué au ressort 7 d'une raideur préalablement choisie déplace le noyau central 14 dans la carcasse magnétique 18, 19 contenant la bobine 23 dont l'enroulement 26 est relié au circuit oscillateur 34. Le déplacement du noyau 14 modifie l'inductance de l'enroulement 26 en changeant la perméabilité effective suivant l'axe de la bobine 23. La variation de l'inductance de l'enroulement 26 en fonction du déplacement D du noyau 14 se traduit par une variation de fréquence f du signal délivré par le circuit amplificateur à résistance d'entrée négative 34, variation dont une forme est représentée sur la figure 5 à titre d'exemple.

Pour obtenir une relation déterminée entre le déplacement du noyau 14 et la fréquence du circuit électronique 34, on peut faire varier les dimensions de la bobine 23 telles la fenêtre de bobinage et le diamètre initial de l'enroulement 26, le nombre de spires et le diamètre du fil dudit enroulement, les dimensions des trous percés dans les demi-cylindres emboîtés 18 et 19, enfin le diamètre et les caractéristiques magnétiques du noyau central 14. Ces éléments sont donnés à titre indicatif mais non limitatif.

La pente moyenne de cette relation peut être ajustée de manière continue en modifiant la position de la bobine 23 dans la carcasse magnétique 18, 19. Sur la figure 5 sont représentées des courbes A et B correspondant aux positions extrêmes A et B de la bobine 23 sur la figure 3.

Les transformations effort/pression, et fréquence/déplacement représentées sur les figures 4 et 5 déjà citées peuvent être choisies de sorte que la relation fonctionnelle fréquence/pression soit sensiblement linéaire pour un rapport de fréquence de 1 à 2, comme représentée sur la figure 6, à titre d'exemple. La fréquence f1 peut être réglée par la vis 35 qui déplace la carcasse 18, 19, contenant la bobine 23 avec son enroulement 26, par rapport au noyau central 14, maintenu dans une position déterminée, ce qui modifie l'inductance dudit enroulement. La pression P1 peut être choisie en réglant la précontrainte du ressort 8 par le bouchon fileté 12. On peut régler continûment la pente entre les valeurs A et B de ladite relation fonctionnelle en positionnant la bobine 23 dans la carcasse 18, 19 à l'aide de la vis de réglage 37.

La stabilité de la réponse en fréquence du capteur selon l'invention en fonction de la température peut être prédéterminée en choisissant les dimensions du corps 4 et du support 21 pour des coefficients de dilatation thermique donnés. L'utilisation de matériau léger pour la réalisation du corps 4 peut être retenue en améliorant la rigidité dudit corps par des ailettes de renfort 38 représentées sur la figure 2.

La figure 8 montre un second exemple de réalisation du capteur selon l'invention dans lequel le ressort 39 peut fonctionner s'il y a lieu aussi bien en traction qu'en compression. A titre d'exemple non limitatif, le ressort 39 est fixé à l'une de ses extrémités où il présente une réduction de diamètre d'enroulement 40 dans une gorge 41 pratiquée dans le bouchon composite 42 de réglage du ressort. A son autre extrémité, le ressort 39 présente des spires jointives et précontraintes 43, vissées sur une douille filetée 44 présentant un creux 45 dans lequel le ressort est rabattu de manière à l'immobiliser.

Cette douille 44 est solidaire de deux coupelles 46 et 47 enserrant la membrane souple 48 soumise à la pression.

Le mode d'action du capteur de pression de la figure 8 est voisin de celui de la figure 1 puisque dans les deux cas le déplacement de la membrane entraîne un déplacement identique du noyau. Cependant, cette forme de réalisation peut être montée sans aucune précontrainte et permet de choisir une position initiale autre qu'en butée.

D'autres variantes de réalisation sont possibles et notamment l'usage de ressorts antagonistes situés de part et d'autre de la membrane.

## Revendications

1. Capteur de pression, notamment pour mesurer la pression à l'admission d'un moteur à explosion, du type comprenant :
— une première chambre (1) reliée à l'admission du moteur,
— une deuxième chambre (2) reliée à l'extérieur,
— une membrane souple (3, 48) à contour bloqué séparant de façon étanche la première chambre (1) de la deuxième chambre (2),
— un premier ressort (7, 39), agissant contre la membrane (3),
— un tube (8) de guidage du premier ressort servant de butée à la membrane,
— un noyau cylindrique central (14) en ferrite, mobile selon son axe et solidaire des déplacements de la membrane,
— un enroulement (26) unique placé sur une bobine isolante (23) entourant le noyau mobile coaxialement à celui-ci et couvrant la plus grande partie dudit noyau mobile dans sa position la plus enfoncée, et
— un circuit électronique (34) transducteur des déplacements de la membrane et connecté à l'enroulement (26),
caractérisé en ce que le circuit électronique est un circuit oscillateur (34) de manière à constituer un transducteur pression/fréquence ; en ce que le capteur comprend un premier moyen de réglage (11) pour régler axialement la position du premier ressort par rapport au tube de guidage (8) de manière à pouvoir utiliser des ressorts de longueur différente et/ou pour régler pour une pression donnée la distance axiale entre les extrémités dudit premier ressort de manière à modifier la précontrainte dudit premier ressort ; en ce que l'enroulement (26) et la bobine (23) sont placés à l'intérieur d'une carcasse magnétique (18, 19) en ferrite, fermée en forme de cylindres emboîtés et coaxiale à la bobine ; et en ce que le capteur comprend un deuxième moyen de réglage axial (21, 35) de la position, pour une pression donnée, de l'ensemble carcasse magnétique (18, 19) et bobine (23) par rapport au noyau mobile (14).

2. Capteur selon la revendication 1, caractérisé en ce que la carcasse magnétique est constituée de deux demi-cylindres (18, 19) identiques ou non, plaqués l'un contre l'autre et contre le second moyen de réglage (21, 35) par un ressort de poussée (20) dit deuxième ressort, et en ce que la carcasse magnétique est fermée et percée d'un trou à chacune de ses extrémités le long de son axe pour permettre le passage du noyau mobile, ladite bobine ayant des extrémités cylindriques (27, 28) qui dépassent la carcasse à travers les trous, formant un coin d'air entre eux et le noyau mobile, et guident ledit noyau mobile dans ladite carcasse.

3. Capteur selon l'une quelconque des revendications 1 et 2, caractérisé en ce qu'il est prévu un troisième moyen de réglage (37) pour régler axialement la position de la bobine (23) par rapport à la carcasse (18, 19).

4. Capteur selon la revendication 3, caractérisé en ce que le deuxième moyen de réglage ainsi que le troisième moyen de réglage comportent chacun une vis de réglage (35, 37), lesdites vis étant coaxiales entre elles et coaxiales à la bobine et en ce qu'il est prévu un moyen de freinage de l'une des vis par rapport à l'autre.

5. Capteur selon l'une quelconque des revendications 3 et 4, caractérisé en ce que la bobine (23) est en matière plastique souple et porte à l'une de ses extrémités deux ailes (24, 25) qui prennent appui contre l'intérieur de la carcasse pour mettre en butée ladite bobine contre le troisième moyen de réglage (37).

6. Capteur selon l'une quelconque des revendications 1 à 5, caractérisé en ce qu'il est prévu une pièce cylindrique (29) en matière plastique munie d'une fourche (30) pour la fixation d'un condensateur (31) d'accord de l'enroulement (26), de deux premières ailettes (32, 33) et d'une deuxième fourche (49) pour la liaison avec les connexions de sortie de l'enroulement, du condensateur et des fils de sortie.

7. Capteur selon l'une quelconque des revendications 1 à 6, caractérisé en ce qu'il comprend un corps (4) contenant un circuit magnétique (14, 18, 19) constitué par le noyau mobile et la carcasse et sur lequel est sertie une calotte (5) contenant la membrane souple (3), en ce que le corps est constitué d'un matériau léger et rigide de coefficient de dilatation connu et possédant des deuxièmes ailettes (38) de renfort pour accroître sa rigidité, et en ce qu'il est prévu pour la carcasse un support (21) en matière plastique de coefficient de dilatation et d'épaisseur déterminés et qui s'interpose entre le corps et le circuit magnétique.

8. Capteur selon l'une quelconque des revendications 1 à 7, caractérisé en ce que le premier moyen de réglage est une vis (11) placée dans ledit tube de guidage à l'extrémité du premier ressort (7, 39) opposée à la membrane (3, 48).

9. Capteur selon l'une quelconque des revendications 1 à 8, caractérisé en ce que le premier ressort (39) est fixé sans jeu par une gorge (41) et une douille filetée (42) à l'une de ses extrémités sur le premier moyen de réglage et à l'autre de ses extrémités sur la membrane (48).

10. Capteur selon l'une quelconque des revendications 1 à 9, caractérisé en ce que la deuxième chambre est reliée à l'extérieur par un filtre pneumatique (17) présentant une perte de charge connue.

11. Capteur selon l'une quelconque des revendications 1 à 10, caractérisé en ce que la membrane (3) est maintenue entre le premier ressort (7, 39) et un troisième ressort situés de part et d'autre de ladite membrane.

12. Capteur selon la revendication 8, caractérisé en ce qu'il comprend, en regard d'une extrémité (9) du tube de guidage (8) formant butée pour la membrane (3), une paroi en forme de butée (12) contre laquelle la membrane souple (3) est appliquée par le premier ressort (7) dans certaines conditions de pression.

**Claims**

1. A pressure detector, in particular for measuring the pressure at the intake of an internal combustion engine, of the type comprising :
— a first chamber (1) connected to the intake of the engine,
— a second chamber (2) connected to the exterior,
— a flexible diaphragm (3, 48) of blocked configuration type, which sealingly separates the first chamber (1) from the second chamber (2),
— a first spring (7, 39) which acts against the diaphragm (3),
— a tube (8) for guiding the first spring, serving as an abutment for the diaphragm,
— a central cylindrical core member (14) of ferrite, which is movable in the direction of its axis and which is fixed with respect to the diaphragm for movement therewith,
— a single winding (26) which is disposed on an insulating coil (23) which surrounds the movable core member coaxially therewith and covers the major part of said movable core in its most inwardly displaced position, and
— an electronic transducer circuit (34) for the movements of the diaphragm, said circuit being connected to the winding (26),
characterised in that the electronic circuit is an oscillator circuit (34) so as to form a pressure/frequency transducer ; that the detector comprises a first adjusting means (11) for axially adjusting the position of the first spring with respect to the guide tube (8) so as to be able to use springs of different length and/or to adjust for a given pressure the axial distance between the ends of said first spring, so as to alter the prestressing of said first spring ; that the winding (26) and the coil (23) are disposed within a magnetic casing (18, 19) of ferrite, which is closed, in the form of cylinders that are engaged with each other and which is coaxial with respect to the coil ; and that the detector comprises a second means (21, 35) for axial adjustment of the position, for a given pressure, of the assembly comprising the magnetic casing (18, 19) and the coil (23) with respect to the movable core member (14).

2. A detector according to claim 1, characterised in that the magnetic casing comprises two half cylinders (18, 19) which may or may not be identical and which are urged one against the other and against the second adjusting means (21, 35) by a thrust spring (20), referred to as the second spring, and that the magnetic casing is closed and apertured with a hole at each of its ends along its axis to permit the movable core member to pass therethrough, said coil having cylindrical end portions (27, 28) which pass through the casing through the holes, forming an air gap between them and the movable core member, and guide said movable core member in said casing.

3. A detector according to either one of claims 1 and 2, characterised in that there is provided a third adjusting means (37) for axially adjusting the position of the coil (23) with respect to the casing (18, 19).

4. A detector according to claim 3, characterised in that the second adjusting means and the third adjusting means each comprise an adjusting screw (35, 37), said screws being coaxial with each other and coaxial with the coil, and that there is provided a means for locking one of the screws with respect to the other.

5. A detector according either one of claims 3 and 4, characterised in that the coil is of flexible plastics material and at one of its ends carries two projecting limb portions (24, 25) which bear against the interior of the casing to cause said coil to bear against the third adjusting means (37).

6. A detector according to any one of claims 1 to 5, characterised in that there is provided a cylindrical member (29) of plastics material, provided with a fork (30) for fixing a matching capacitor (31) of the winding (26), two first projecting limb portions (33) and a second fork (49) for connection to the output terminals of the winding, the capacitor and the output wires.

7. A detector according to any one of claims 1 to 6, characterised in that it comprises a body (4) containing a magnetic circuit (14, 18, 19) formed by the movable core member and the casing and on to which is crimped a cap member (5) containing the flexible diaphragm (3), that the body comprises a light rigid material having a known coefficient of expansion and having second reinforcing limb portions (38) for enhancing ist rigidity, and that there is provided for the casing a support (21) of plastics material having a given coefficient of expansion and being of given thickness and which is interposed between the body and the magnetic circuit.

8. A detector according to any one of claims 1 to 7, characterised in that the first adjusting means is a screw (11) which is positioned in said guide tube at the end of the first spring (7, 39), which is remote from the diaphragm (3, 48).

9. A detector according to any one of claims 1 to 8, characterised in that the first spring (39) is fixed without play by a groove (41) and a screw-threaded holder (42) at one of its ends to the first adjusting means and at the other of its ends to the diaphragm (48).

10. A detector according to any one of claims 1 to 9, characterised in that the second chamber is connected to the exterior by a pneumatic filter (17) having a known pressure drop.

11. A detector according to any one of claims 1 to 10, characterised in that the diaphragm (3) is held between the first spring (7, 39) and a third spring, which are disposed on respective sides of said diaphragm.

12. A detector according to claim 8, characterised in that it comprises, facing an end (9) of the guide tube (8) which forms an abutment for the diaphragm (3), a wall portion (12) in the form of an abutment means, against which the flexible diaphragm (3) is applied by the first spring (7) under certain pressure conditions.

**Ansprüche**

1. Druckwandler, insbesondere zur Verbrennungsmotor-Einlaßdruckmessung, mit :
— einer ersten, mit dem Motoreinlaß verbundenen Kammer (1),
— einer zweiten, mit der Umgebung verbundenen Kammer (2),
— einer weichen Membran (3, 48) mit festgehaltenem Umfang, die in dichter Weise die erste Kammer (1) von der zweiten Kammer (2) trennt,
— einer ersten, die Membran (3) beaufschlagenden Feder (7, 39),
— einem Führungsrohr (8) für die erste Feder, die als Anschlag für die Membran dient,
— einem zentralen, zylindrischen Kern (14) aus Ferrit, der entlang seiner Achse beweglich ist und den Verschiebungen der Membran folgt,
— einer einzigen Wicklung (26) auf einer isolierenden Spule (23), die den beweglichen Kern koaxial umgibt und den größten Teil des beweglichen Kerns in seiner am meisten eingedrückten Stellung bedeckt,
— einem elektronischen Schaltkreis (34) als Umformer für die Verschiebungen der Membran, der mit der Wicklung (26) verbunden ist,
dadurch gekennzeichnet, daß der elektronische Schaltkreis ein derartiger Oszillatorkreis (34) ist, daß er einem Umformer Druck/Frequenz bildet, daß der Wandler eine erste Regeleinrichtung (11) aufweist zum axialen Regeln der Stellung der ersten Feder bezüglich des Führungsrohrs (8) derart, daß Federn unterschiedlicher Länge verwendet werden können und/oder zum Regeln für einen ersten vorgegebenen Druck des Axialabstandes zwischen den Enden der ersten Feder derart, daß die Vorspannung der ersten Feder verändert wird ; daß die Wicklung (26) und die Spule (23) im Inneren eines magnetischen Gehäuses (18, 19) aus Ferrit, das aus aneinandergrenzenden Zylindern besteht, koaxial zur Spule, angeordnet sind, und daß der Wandler eine zweite Einrichtung (21, 35) zum axialen Regeln der Stellung für einen vorgegebenen Druck der Gesamtheit aus magnetischem Gehäuse (18, 19) und Spule (23) bezüglich des beweglichen Kerns (14) aufweist.

2. Wandler nach Anspruch 1, dadurch gekennzeichnet, daß das magnetische Gehäuse aus zwei gleichen oder ungleichen Halbzylindern (18, 19) besteht, die aneinander stoßen und gegen die zweite Regeleinrichtung (21, 35) durch eine Druckfeder (20) oder zweite Feder gedrückt werden, und daß das magnetische Gehäuse geschlossen ist und an jedem seiner Enden in Richtung der Achse eine Öffnung aufweist, um den beweglichen Kern hindurchzulassen, wobei die Spule zylindrische Enden (27, 28) aufweist, die sich durch diese Öffnungen im Gehäuse erstrecken, so daß ein Luftkeil zwischen ihnen und dem beweglichen Kern besteht, wobei sie den beweglichen Kern im Gehäuse führen.

3. Wandler nach einem der Ansprüche 1 und 2, dadurch gekennzeichnet, daß eine dritte Regeleinrichtung (37) vorgesehen ist zum axialen Regeln der Stellung der Spule (23) bezüglich des Gehäuses (18, 19).

4. Wandler nach Anspruch 3, dadurch gekennzeichnet, daß die zweite Regeleinrichtung sowie die dritte Regeleinrichtung jeweils eine Stellschraube (35, 37) aufweisen, wobei diese Schrauben koaxial zueinander und koaxial zur Spule sind und daß ein Bremsmittel für eine der Schrauben bezüglich der anderen vorgesehen ist.

5. Wandler nach einem der Ansprüche 3 und 4, dadurch gekennzeichnet, daß die Spule (23) aus weichem Kunststoff besteht und an einem ihrer Enden zwei Flansche (24, 25) trägt, die sich am Inneren des Gehäuses abstützen, so daß die Spule an der dritten Regeleinrichtung (37) anliegt.

6. Wandler nach einem der Ansprüche 1 bis 5, dadurch gekennzeichnet, daß ein zylindrisches Teil (29) aus Kunststoff vorgesehen ist, das mit einer Gabel (30) versehen ist zur Befestigung eines Abstimmkondensators (31) für die Wicklung (26), das zwei erste Flansche (32, 33) und eine zweite Gabel (49) aufweist, für die Verbindung mit den Ausgangsanschlüssen der Wicklung, des Kondensators und den Ausgangsdrähten.

7. Wandler nach einem der Ansprüche 1 bis 6, dadurch gekennzeichnet, daß er ein Gehäuse (4) aufweist mit einem magnetischen Kreis (14, 18, 19), der aus dem beweglichen Kern und einem Gehäuse gebildet ist und auf dem eine Haube (5) befestigt ist, welche die weiche Membran (3) enthält, daß das Gehäuse aus einem leichten und steifen Material besteht mit bekanntem Ausdehnungs-Koeffizienten und Verstärkungsrippen (38) aufweist zur Erhöhung seiner Steifheit und daß für das Gehäuse eine Halterung (21) aus Kunststoff mit vorgegebenen Ausdehnungs-Koeffizienten und vorgegebener Dicke vorgesehen ist, das zwischen dem Gehäuse und dem magnetischen Kreis angeordnet ist.

8. Wandler nach einem der Ansprüche 1 bis 7, dadurch gekennzeichnet, daß die erste Regeleinrichtung eine Schraube (11) ist, die im Führungsrohr angeordnet ist an demjenigen Ende der ersten Feder (7, 39), das der Membran (3, 48) gegenüberliegt.

9. Wandler nach einem der Ansprüche 1 bis 8, dadurch gekennzeichnet, daß die erste Feder (39) ohne Spiel in einer Nut (41) befestigt ist und an einer Buchse (42), deren eines Ende an der ersten Regeleinrichtung aufgeschraubt ist und deren anderes Ende mit der Membran (48) verbunden ist.

10. Wandler nach einem der Ansprüche 1 bis 9, dadurch gekennzeichnet, daß die zweite Kammer mit dem äußeren durch ein pneumatisches Filter (17) mit bekanntem Druckverlust verbunden ist.

11. Wandler nach einem der Ansprüche 1 bis 10, dadurch gekennzeichnet, daß die Membran (3) zwischen der ersten Feder (7, 39) und einer dritten Feder beiderseits der Membran gehalten ist.

12. Wandler nach Anspruch 8, dadurch gekennzeichnet, daß er gegenüber einem Ende (9) des Führungsrohrs (8), das den Anschlag für die Membran (3) bildet, eine Wand in Form eines Anschlages (12) aufweist, an der die weiche Membran (3) durch die Feder (7) bei bestimmten Druckbedingungen anliegt.

**0 036 809**

FIG.1

CI oscillateur

FIG 2

17

36

X ——— X'

34

38

FIG 3

26  19  28

18  36

23

27

35

A

37

B

21

FIG. 4

FIG. 5

FIG. 6

FIG.7

FIG 8